# EUROPÄISCHE PATENTSCHRIFT

(11) **EP 2 072 914 B1**
(45) Veröffentlichungstag und Bekanntmachung des Hinweises auf die Patenterteilung: **29.08.2012**
(21) Anmeldenummer: 08020128.8
(22) Anmeldetag: 19.11.2008
(51) Int. Cl.: F24D 3/10

(54) **Vorrichtung zur gerichteten Durchführung mindestens eines Fluids entlang unterschiedlicher Strömungswege**
Device for targeted guidance of at least one fluid along different flow routes
Dispositif destiné au passage orienté d'au moins un fluide le long de voies d'écoulement différentes

(30) Priorität: 22.12.2007 DE 102007062362
(43) Veröffentlichungstag der Anmeldung: 24.06.2009
(73) Patentinhaber: KIOTO Clear Energy AG, 9300 St. Veit an der Glan (AT)
(72) Erfinder: Berger, Erwin, 7083 Purbach (AT); Kreiner, Thomas, 2443 Loretto (AT); Stricker, Erwin, 2443 Loretto (AT)
(74) Vertreter: Becker, Thomas

(56) Entgegenhaltungen:
- WO-A-83/00545
- DE-A1- 3 110 146
- DE-A1- 10 244 256
- DE-A1- 19 654 354
- DE-U1- 29 712 662
- DE-U1- 29 900 636
- DE-U1-202004 019 873
- DE-U1-202005 014 029
- DE-U1-202006 019 415
- FR-A- 2 455 700

## Beschreibung

Die Erfindung betrifft eine Vorrichtung zur gerichteten Durchführung mindestens eines Fluids entlang unterschiedlicher, vorbestimmbarer Strömungswege.

Der Stand der Technik und die Erfindung werden nachstehend anhand einer Vorrichtung erläutert, die Bestandteil eines komplexen Warmwasser- und Heizungssystems ist, welches auf Basis erneuerbarer Energieträger arbeitet.

In diesem Zusammenhang ist der Einsatz von Luftwärmetauschern, Solarwärmetauschern oder Erdwärmetauschern ebenso bekannt wie die Verwendung einer Wärmepumpe, um ein Fluid von einem Temperaturniveau x auf ein Temperaturniveau y zu bringen.

Im Stand der Technik laufen die einzelnen Wärmetauscher weitestgehend getrennt voneinander. Aber auch dann, wenn beispielsweise Luft- und Solarwärmetauscher innerhalb eines Projektes installiert sind erfolgt die Zuführung eines entsprechenden Wärmeträgers (Fluids) zur Wärmepumpe regelmäßig getrennt. Dies erfordert einen erheblichen Installationsaufwand. Ein weiterer Nachteil ist, dass bestimmte Systemzustände, wie sie nachstehend erläutert werden, nicht oder nur aufwendig realisiert werden können.

Daneben ist auf folgenden Stand der Technik hinzuweisen:
Die DE 297 12 662 U1 beschreibt eine Verteilervorrichtung für einen Wärmeträger mit einer Reihenanordnung von Mehrwegeventilen. Aus der DE 299 00 636 U1 ist eine Verteilervorrichtung für ein Heizungssystem bekannt, bei dem Ströme unterschiedlicher Temperatur über Mischventile auf ein gewünschtes Temperaturniveau gebracht werden. Der Verteiler gemäß DE 196 54 354 A1 umfasst nebeneinander angeordnete Ventile, die über eine gemeinsame Nockenwelle aktiviert werden. Die Verteiler gemäß DE 20 2004 019 873 U 1 und DE 31 10 146 A1 beschreiben voreingestellte Strömungswege für verschiedene Heizkreisläufe.

Aufgabe der Erfindung ist es, eine Möglichkeit aufzuzeigen, unterschiedliche Fluidströme unterschiedlicher Anlagenteile eines komplexen Warmwasser- und Heizungssystems bedarfsweise miteinander zu verbinden oder gegeneinander abzuschotten.

Dabei geht die Erfindung von folgenden Überlegungen aus: In einem sogenannten Solekreislauf wird beispielsweise ein Trägermedium (Fluid) wie Glykol durch einen Sonnenkollektor (auch Solarwärmetauscher) erwärmt. Steht genügend Primärenergie (Sonne) zur Verfügung lässt sich die Sole beispielsweise auf Temperaturen von 60° C bis 120° C erwärmen und direkt über einen Wärmetauscher auf Wasser übertragen.

Der Solekreislauf kann alternativ über einen Verdampferteil einer Wärmepumpe geführt werden, wo die Sole beispielsweise um 5° C bis 10° C abgekühlt werden kann. Ein Kältemittel, welches in der Wärmepumpe zirkuliert, dient dann im Weiteren der Erwärmung von Wasser, welches in einem isolierten Behälter gespeichert werden kann.

Für den genannten Beispielsfall wäre es wünschenswert, Solekreislauf, Kältemittelkreislauf und Wasserkreislauf zu verknüpfen.

Anforderungen an eine weitergehende Verknüpfung ergeben sich, wenn beispielsweise neben Sonnenkollektoren auch Luftwärmetauscher oder Erdwärmesonden in das Warmwasser- und Heizungssystem eingebunden werden sollen, und zwar unter bestimmten Voraussetzungen und zu bestimmten Zeiten einzeln oder in beliebigen, vorwählbaren Kombinationen. Ausgehend von einem Warmwasser- und Heizungssystem mit einem Außenluft-Wärmetauscher, einem Solarkollektor, einer Wärmepumpe und einem von der Wärmepumpe unabhängigen Plattenwärmetauscher ergeben sich folgende Zuführ- und Wegführleitungen:
- je eine Zuführ- und Wegführleitung für den Luftwärmetauscher,
- je eine Zuführ- und Wegführleitung für den Solarkollektor,
- je eine Zuführ- und Wegführleitung für den Plattenwärmetauscher,
- je eine Zuführ- und Wegführleitung für die Wärmepumpe (deren Verdampferteil),
insgesamt also acht Zuführ- und Wegführleitungen für die zugehörigen Fluide.

Ein erster Erfindungsgedanke besteht darin, diese Zuführ- und Wegführleitungen über eine gemeinsame Vorrichtung miteinander strömungstechnisch zu verknüpfen, und zwar derart, dass eine Zuführleitung wahlweise mit der einen und/oder anderen Wegführleitung strömungstechnisch gekoppelt werden kann beziehungsweise eine Wegführleitung wahlweise mit der einen und/oder anderen Zuführleitung strömungstechnisch verbindbar ist.

Mit anderen Worten: In der Vorrichtung laufen alle Fluidwege des gesamten Systems von und zu den einzelnen Wärmetauscher etc. zusammen und die Strömungswege werden je nach Rahmenbedingungen in der Vorrichtung eingestellt.

Im einfachsten Fall erfolgt bei hoher Sonneneinstrahlung und entsprechend hohem Rücklauf aus dem Solarkollektor eine direkte Durchleitung der Sole durch die Vorrichtung in den Vorlauf des Plattenwärmetauschers. Entsprechend sind sonstige Verbindungen des Rücklaufs des Solarkollektors (der erfindungsgemäß eine Zuführleitung in die Vorrichtung darstellt) geschlossen, das heißt, von dieser Zuführleitung besteht dann ausschließlich eine strömungstechnische Verbindung zum Vorlauf des Plattenwärmetauschers.

In einem anderen Anwendungsfall kann beispielsweise der Rücklauf eines Außenluft-Wärmetauschers, bevor er in den Vorlauf des Verdampfers der Wärmepumpe geleitet wird, über den Sonnenkollektor geführt werden, das heißt die entsprechende Sole wird vom Luftwärmetauscher in die Vorrichtung hineingeführt, dort zu einer Wegführleitung geführt, die in den Vorlauf des Solarkollektors mündet. Nach Durchströmen des Solarkollektors wird die Sole in die Vorrichtung zurückgeführt, und zwar über die vorstehend bereits erwähnte Zuführleitung vom Solarkollektor in die Vorrichtung, von wo die Sole anschließend in eine weitere Wegführleitung umgelenkt wird, die zum Vorlauf des Verdampfers der Wärmepumpe führt.

Die Einstellung der unterschiedlichsten Strömungswege erfolgt über Ventile, die einzelne Zuführleitungen von einzelnen Wegführleitungen absperren oder diese miteinander verbinden. Der weitere Erfindungsgedanke besteht darin, die Ventile über eine gemeinsame Nockenwelle zu aktivieren. Je nach Positionierung der Nockenwelle und der Nocken lassen sich einzelne Ventile oder Gruppen von Ventilen in vorwählbarer Kombination aktivieren und damit bestimmte Strömungswege frei schalten oder absperren.

Danach betrifft die Erfindung in ihrer allgemeinsten Ausführungsform eine Vorrichtung zur gerichteten Durchführung mindestens eines Fluids entlang unterschiedlicher, vorbestimmbarer Strömungswege, mit den Merkmalen von Anspruch 1.

Auf diese Weise entsteht eine Art Labyrinth, wobei über die Ventile einzelne Strömungswege freigegeben oder absperren.

Die Bauform der Vorrichtung wird optimiert, wenn mehrere Zuführ- und Wegführleitungen, im Idealfall: alle, entlang eines Niveaus in Haupt-Strömungsrichtung des Fluids (der Fluide) hintereinander angeordnet sind. Der Begriff "Niveau" ist dahingehend zu verstehen, dass die Zuführ- und Wegführleitungen entlang einer "Ebene" liegen, wobei der Begriff "Ebene" hier 3-dimensional im Sinne einer Etage zu verstehen ist.

Der Begriff "Haupt-Strömungsrichtung" soll charakterisieren, dass ein Fluid bei dieser Ausführungsform entlang einer "Ebene" (Etage) einströmt und die Vorrichtung auch wieder entlang dieser "Ebene" (Etage) verlässt.

Demgegenüber kann der mindestens eine Strömungskanal, mit dem die Zuführleitungen und Wegführleitungen verbindbar sind, in einem davon getrennten "Niveau", also einer darüber oder darunter liegenden Etage angeordnet sein, woraus sich ableitet, dass das Fluid in diesem Fall entlang einer ersten Etage zuströmt, von dort in die zweite Etage geführt wird, wo es entlang des Strömungskanals in die erste Etage zurückgeführt und aus dieser herausgeführt wird.

Durch die bereits genannte Ventilanordnung kann es je nach Anwendungsfall genügen, einen gemeinsamen Strömungskanal für mehrere Zuführ- und Wegführleitungen vorzusehen, wobei einzelne Zuführ- und Wegführleitungen wahlweise mit dem Strömungskanal verbunden werden können.

Die Bauform der Vorrichtung wird reduziert sofern das Niveau für den Strömungskanal/die Strömungskanäle parallel zu dem Niveau liegt, in dem die Zuführ- und Wegführleitungen angeordnet sind.

Zum Transport des Mediums (Fluids) durch die Vorrichtung sieht eine weitere Ausführungsform den Anschluss einer Zirkulationspumpe an die Zuführ- und Wegführleitungen vor.

Dies kann so erfolgen, dass ein Saug- und Druckpunkt der Zirkulationspumpe strömungstechnisch mit dem Strömungskanal (den Strömungskanälen) verbindbar ist. Entsprechend kann der Saug- und Druckpunkt der Pumpe beispielsweise im Bereich einer dritten Ebene (eines dritten Niveaus) angeordnet sein, so dass sich insgesamt dann ein drei etagiger Aufbau der Vorrichtung ergibt.

Bei einer nachstehend auch zeichnerisch dargestellten Ausführungsform umfasst die Vorrichtung vier Zuführleitungen, vier Wegführleitungen und neun Ventile, die in Reihe geschaltet und über eine gemeinsame Nockenwelle aktivierbar sind.

Die Erfindung wird nachstehend anhand verschiedener Ausführungsbeispiele näher erläutert. Die dabei offenbarten Merkmale können unabhängig von konkreten Ausführungsbeispielen für den Erfindungsgedanken sowohl einzeln als auch in beliebigen Kombinationen wesentlich sein.

Dabei zeigen, jeweils in stark schematisierter Darstellung:
- Figur 1:: eine perspektivische Ansicht der erfindungsgemäßen Vorrichtung,
- Figur 2:: eine Explosionsdarstellung der Vorrichtung für einen 1. Anwendungsfall,
- Figur 3:: einen Schnitt durch die Vorrichtung nach Figur 2,
- Figur 4:: eine Explosionsdarstellung der Vorrichtung zu einem 2. Anwendungsfall,
- Figur 5:: eine Explosionsdarstellung der Vorrichtung zu einem 3. Anwendungsfall,
- Figur 6:: eine Explosionsdarstellung der Vorrichtung zu einem 4. Anwendungsfall,
- Figur 7:: eine Explosionsdarstellung der Vorrichtung zu einem 5. Anwendungsfall.

In den Figuren sind gleiche oder gleich wirkende Bauteile mit gleichen Bezugsziffern dargestellt.

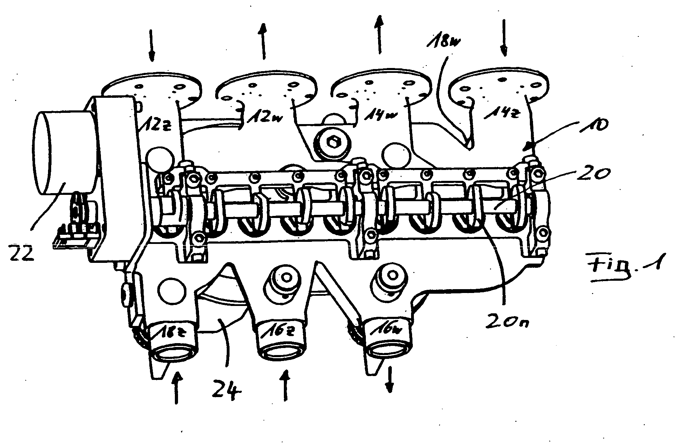

Gemäß Figur 1 umfasst die Vorrichtung unter anderem folgende wesentliche Bauteile:
- ein Gehäuse 10
- eine Zuführleitung 12z in das Gehäuse 10, die eine Sole aus einem Rücklauf eines nicht dargestellten Luftwärmetauschers in die Vorrichtung führt,
- eine daneben angeordnete korrespondierende Wegführleitung 12w, über die die Sole zum Vorlauf des Luftwärmetauschers zurücktransportiert werden kann,
- eine Zuführleitung 14z, analog der Zuführleitung 12z, die jedoch zum Anschluss an den Rücklauf eines Solarkollektors dient,
- eine korrespondierende Wegführleitung 14w für die Sole, die dann weiter in den Solarkollektor zurückgeleitet wird,
- eine Zuführleitung 16z in das Gehäuse 10 der Vorrichtung, die an einen Rücklauf eines nicht dargestellten autarken Plattenwärmetauschers angeschlossen werden kann,
- eine korrespondierende Wegführleitung 16w, um die Sole zum Plattenwärmetauscher zurückzuführen,
- eine Zuführleitung 18z, entlang der ein Kältemittel von einem nicht dargestellten Verdampfer einer Wärmepumpe in die Vorrichtung transportiert werden kann,
- eine zugehörige Wegführleitung 18w, an die sich entsprechend ein Vorlauf zum Verdampfer der Wärmepumpe anschließen lässt. Die Wegführleitung 18w zweigt von der Zuführleitung 14z ab.
- eine Nockenwelle 20 mit Nocken 20n, die auf Ventile 1...9 einer Ventilreihe wirken, die nachstehend näher erläutert wird, ebenso wie die Anordnung und Funktion eines Schrittmotors 22 für die Nockenwelle 20 sowie einer Pumpe 24 zum Transport der Fluide durch die Vorrichtung.

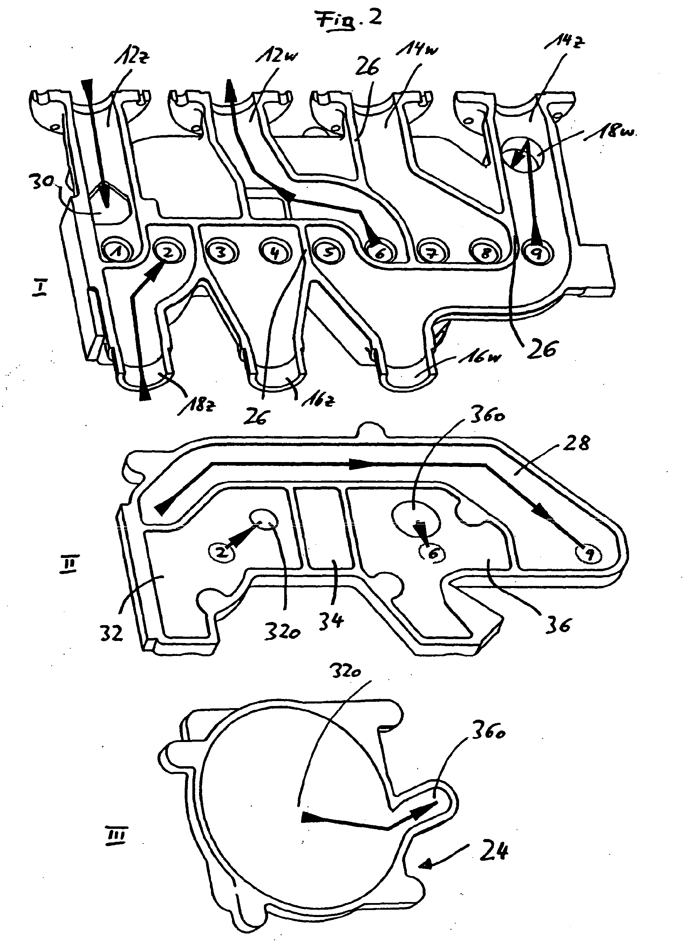

Die explosionsartige Darstellung gemäß Figur 2 zeigt die in der Beschreibungseinleitung erwähnten drei Ebenen der Vorrichtung, mit I, II und III bezeichnet. Die drei Ebenen I, II, III sind wie die Etagen eines Wohnhauses parallel zueinander und übereinander angeordnet.

In der Ebene I liegen die Zuführ- und Wegführleitungen 12z ... 18w, die durch Zwischenwände 26 voneinander getrennt sind. Zu erkennen ist die bereits erwähnte Ventilreihe aus neun Ventilen 1 ....9, die in einer Reihe nebeneinander verlaufen, die in etwa mittig im Gehäuse 10 liegt.

Beispielsweise liegt das Ventil 1 am inneren Ende der Zuführleitung 12z beziehungsweise das Ventil 6 am inneren Ende der Wegführleitung 12w während der Zuführleitung 16z innenseitig zwei Ventile 3, 4 zugeordnet sind.

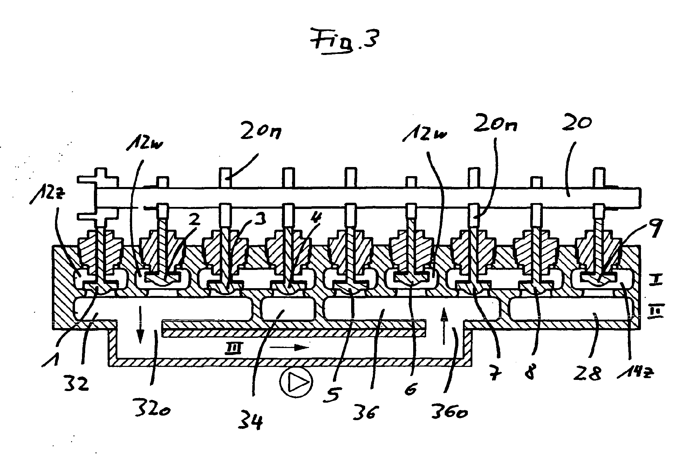

Wie Figur 3 zeigt kann über die Ventile 1... 9 eine strömungstechnische Verbindung zu einer darunter liegenden zweiten Ebene II hergestellt werden, die gemäß Figur 2 einen Strömungskanal 28 umfasst, der eine strömungstechnische Verbindung zwischen einer wandseitigen Öffnung 30 in der Zuführleitung 12z und den Ventilen 8, 9 herstellt. Davon abgegrenzt sind ein weiterer Strömungsweg 32, dem die Ventile 1, 2, 3 zugeordnet sind, ein Raum 34, dem Ventil 4 gegenüberliegend, und ein weiterer Strömungskanal 36, dem die Ventile 5, 6 und 7 zugeordnet sind.

In Verbindung mit Figur 3 ergibt sich weiters, dass im Strömungsraum 32 eine Öffnung 32o und im Strömungsraum 36 eine Öffnung 36o wandseitig verlaufen, die mit einer dritten Ebene III in Verbindung stehen, wobei die Öffnung 32o den Saugpunkt und die Öffnung 36o den Druckpunkt der zugehörigen Pumpe 24 (Figur 1) bildet.

Der Anwendungsfall nach den Figuren 2, 3 betrifft den alleinigen Betrieb eines Außenluft-Wärmetauschers, der an eine Wärmepumpe angeschlossen ist.

Ein Fluid (eine Sole) strömt über den Rücklauf des Verdampfers entlang der Ebene I in die Zuführleitung 18z und über das geöffnete Ventil 2 in den Strömungskanal 32 der Ebene II. Über die Pumpe 24 wird das Fluid über den Saugpunkt 32o angesaugt und über den Druckpunkt der Pumpe (die Öffnung 36o) in den Strömungskanal 36 der Ebene II zurückgefördert, von wo die Sole über das geöffnete Ventil 6 in die Wegführleitung 12w (den Vorlauf) des Luftwärmetauschers gelangt. Nach Erwärmung im Luftwärmetauscher erfolgt die Rückführung der Sole über die Zuführleitung 12z, die Öffnung 30, den Strömungskanal 28, das geöffnete Ventil 9 in die Zuführleitung 14z sowie die Wegführleitung 18w zum Vorlauf des Verdampfers, um den Kreislauf zu schließen.

Entsprechend sind die Ventile 1, 3, 4, 5, 7 und 8 bei diesem Betriebsfall geschlossen.

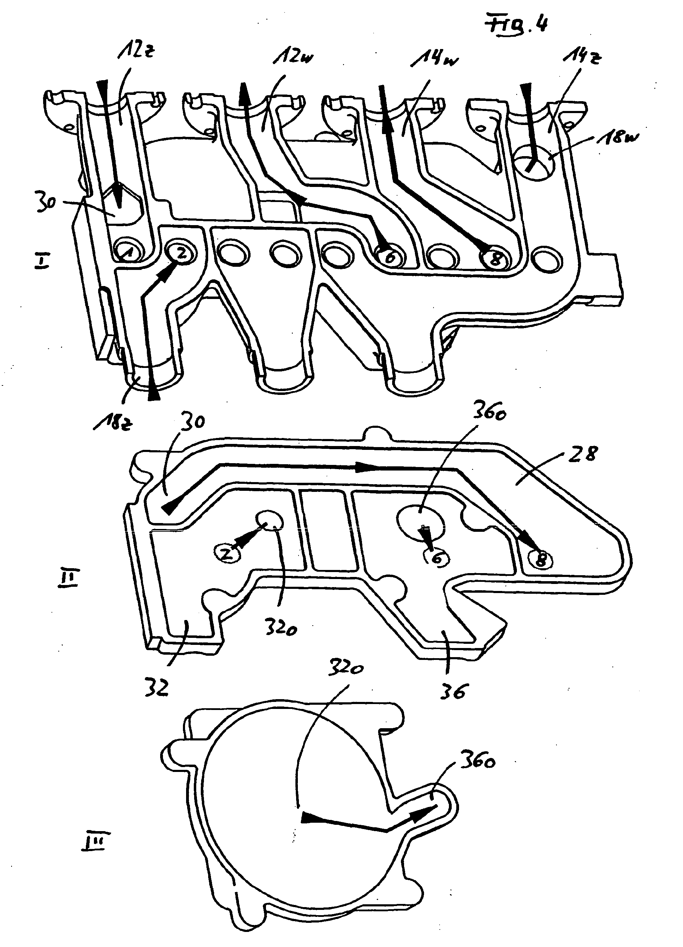

Figur 4 zeigt einen weiteren Anwendungsfall, bei dem der Luftwärmetauscher und der Solarkollektor in Reihe hintereinander geschaltet sind. Ausgehend vom Rücklauf des Luftwärmetauschers strömt die Sole auf folgenden Wegen durch die Vorrichtung: Zuführleitung 12z, Öffnung 30, Strömungskanal 28, Ventil 8, Wegführleitung 14w, dann durch den nicht dargestellten Solarkollektor und zurück über dessen Rückführleitung in die Zuführleitung 14z, von dort in die Wegführleitung 18w zum (nicht dargestellten) Verdampfer und über dessen Rückführleitung in die Zuführleitung 18z, anschließend über das geöffnete Ventil 2 in den Strömungskanal 32, von dort mit Unterstützung der Pumpe durch die Öffnungen 32o, 36o entlang der Ebene III zurück in den Strömungskanal 36 (Ebene II) und über das Ventil 6 in die Wegführleitung 12w (Ebene I) zurück zum Luftwärmetauscher.

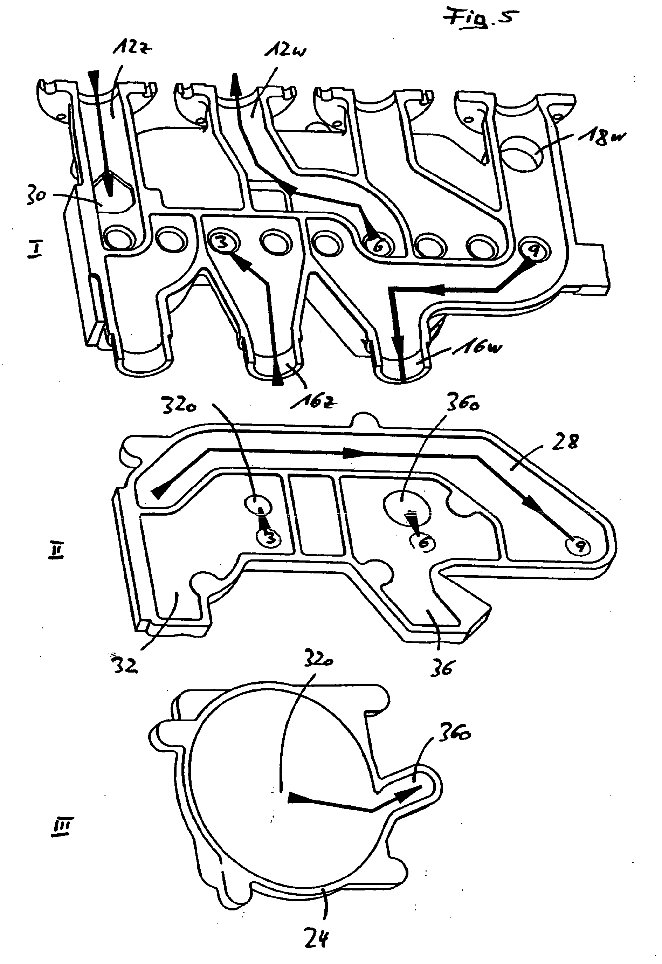

Figur 5 zeigt einen völlig anderen Anwendungsfall. Im Winter kann es passieren, dass der Luftwärmetauscher vereist. Die Vorrichtung bietet jetzt die Möglichkeit einer umgekehrten Fahrweise. Aus einem (nicht dargestellten) Pufferspeicher wird Wasser über den ebenfalls nicht dargestellten Plattenwärmetauscher geleitet, um die Sole (Glykol) zu erwärmen, welche anschließend wie folgt durch die Vorrichtung geleitet wird: Zuführleitung 16z, geöffnetes Ventil 3, Strömungskanal 32, Öffnung 32o, Ebene III, Öffnung 36o, Strömungskanal 36, Ventil 6, Wegführleitung 12w, dann durch den Luftwärmetauscher, der aufgrund der warmen Sole abtaut und anschließend zurück über die Zuführleitung 12z durch die Öffnung 30, den Strömungskanal 28, das Ventil 9 und die Wegführleitung 16w zurück in den Plattenwärmetauscher.

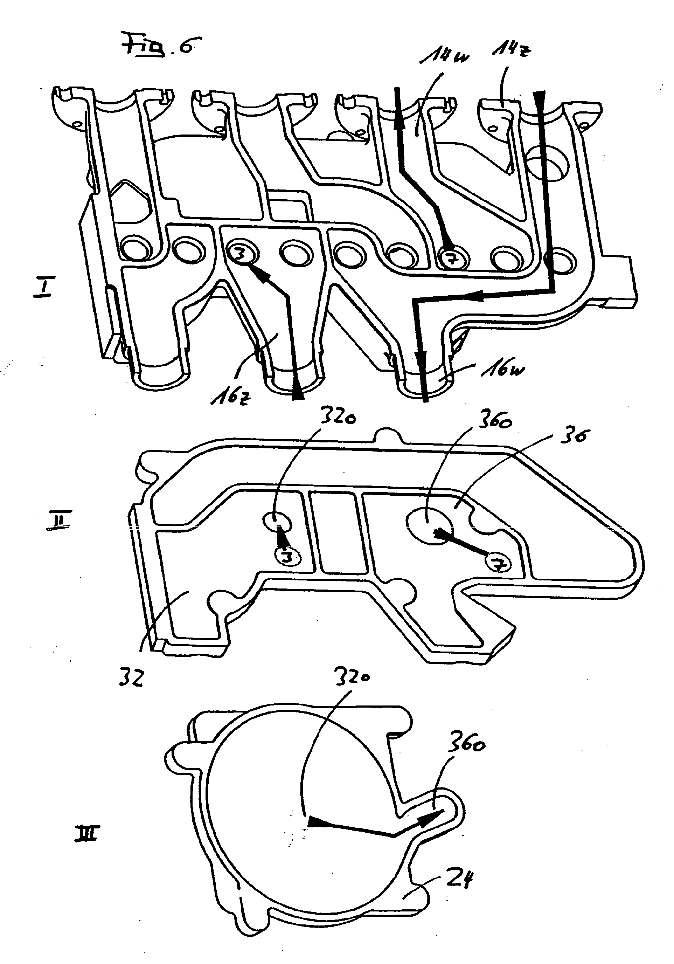

Für den Fall starker Sonneneinstrahlung und hoher Leistung des Solarkollektors kann gemäß dem in Figur 6 dargestellten Anwendungsfall eine direkte Beladung des Plattenwärmetauschers erfolgen. In diesem Fall wird die Sole über die Zuführleitung 14z direkt in die Wegführleitung 16w zum Plattenwärmetauscher geführt. Der Rücklauf des Plattenwärmetauschers mündet anschließend in die Zuführleitung 16z, von wo die Sole durch das Ventil 3 entlang der Strömungskanäle 32, 36 durch das Ventil 7 und die Wegführleitung 14w zum Solarkollektor zurückgeführt wird. Dabei sind die Ventile 1, 2, 4, 5, 6, 8 und 9 geschlossen.

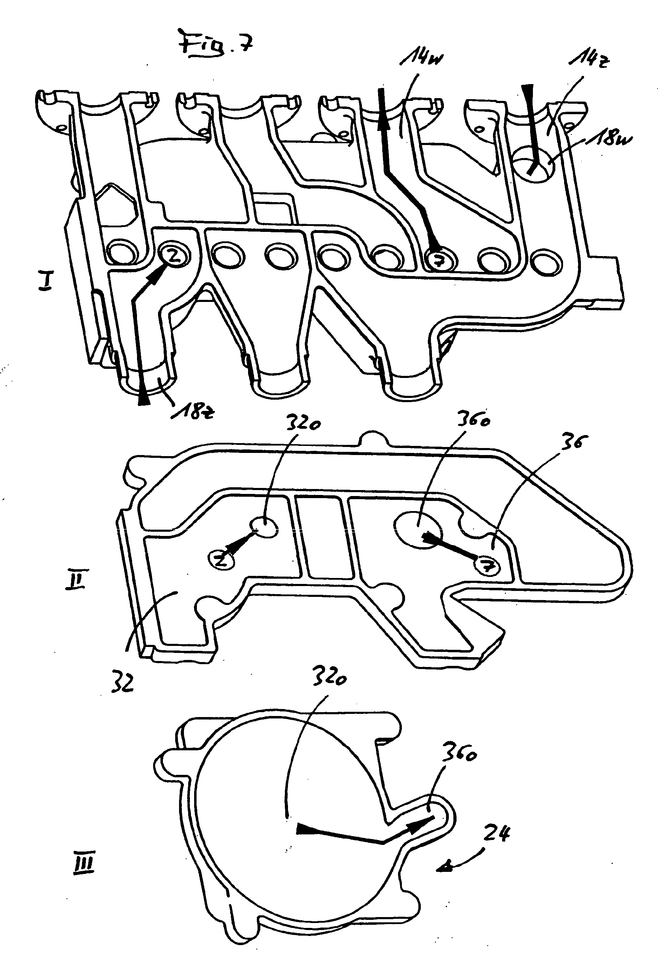

Bei ausschließlichem Solarbetrieb kann gemäß Figur 7 der Rücklauf des Verdampfers wieder mit der Zuführleitung 18z gekuppelt werden. Durch das Ventil 2 gelangt die Sole in die Ebene II, von dort, wie beschrieben, in die Ebene III, durch die Öffnung 36o anschließend wieder zurück in die Ebene II und dort durch das Ventil 7 in die Wegführleitung 14w zum Solarkollektor. Der Rücklauf des Solarkollektors mündet analog in die Zuführleitung 14z der Vorrichtung, von wo die Sole über die Wegführleitung 18w zum Verdampfer zurückgeführt wird.

Ein nicht dargestellter anderer Anwendungsfall sieht vor, alle Ventile zu öffnen, beispielsweise um die Gesamtanlage mit Sole zu füllen oder umgekehrt zu entleeren.

Die Ventile 1...9 werden in der jeweils benötigten Konstellation (einzelnen oder in Gruppen) über die Nocken 20n der Nockenwelle 20 aktiviert (geöffnet, geschlossen), und zwar mit Hilfe des entsprechend programmierten Stellmotors 22.

Die Vorrichtung lässt sich auf beliebige Zuführ- und Rückführleitungen erweitern oder verkleinern, ohne das erfindungsgemäße Prinzip zu verlassen. Dies gilt auch bei anderen Anwendungen als dargestellt.

## Patentansprüche

1. Vorrichtung zur gerichteten Durchführung mindestens eines Fluids entlang unterschiedlicher, vorbestimmbarer Strömungswege, mit:
mehreren Zuführleitungen (12z ...18z) für das Fluid in die Vorrichtung, und
mehreren Wegführleitungen (12w ... 18w) für das Fluid aus der Vorrichtung, wobei
die Zuführleitungen (12z ... 18z) und Wegführleitungen (12w ... 18w) über mindestens einen Strömungskanal (28,32,34,36) verbindbar sind, der gegenüber den Zuführleitungen (12z ... 18z) und/oder Wegführleitungen (12w ... 18w) mittels Ventilen (1....9) absperrbar ist,
**dadurch gekennzeichnet, dass**
die Ventile (1...9) über eine gemeinsame Nockenwelle (20) aktivierbar sind.

2. Vorrichtung nach Anspruch 1, bei der
mindestens eine Zuführleitung (12z ... 18 z) über mindestens ein Ventil (1...9) wahlweise mit unterschiedlichen Wegführleitungen (12w ... 18w) zur Ausbildung unterschiedlicher Strömungswege verbindbar ist, und/oder
mindestens eine Wegführleitung (12w ... 18w) über mindestens ein Ventil (1 ... 9) wahlweise mit unterschiedlichen Zuführleitungen (12z ... 18z) zur Ausbildung unterschiedlicher Strömungswege verbindbar ist.

3. Vorrichtung nach Anspruch 1, bei der mehrere Zuführ- (12z ... 18z) und Wegführleitungen (12w ... 18w) entlang eines Niveaus (I) in Haupt-Strömungsrichtung des Fluids hintereinander angeordnet sind.

4. Vorrichtung nach Anspruch 1, bei der mehrere Zuführ- (12z ... 18z) und Wegführleitungen (12w ... 18w) über mindestens einen gemeinsamen Strömungskanal (28,32,34,36) strömungstechnisch verbindbar sind.

5. Vorrichtung nach Anspruch 1, bei der der Strömungskanal (28,32,34,36) entlang eines Niveaus (II) angeordnet ist, das höhenmäßig versetzt zur Haupt-Strömungsrichtung des Fluids verläuft.

6. Vorrichtung nach Anspruch 1, bei der der Strömungskanal (28,32,34,36) entlang eines Niveaus (II) angeordnet ist, das im Wesentlichen parallel zu einem Niveau (I) liegt, entlang dem die Zuführ- (12z ... 18z) und Wegführleitungen (12w ...18w) verlaufen.

7. Vorrichtung nach Anspruch 1, bei der die Zuführ- (12z ... 18z) und Wegführleitungen (12w ... 18w) an eine Zirkulationspumpe (24) anschließbar sind.

8. Vorrichtung nach Anspruch 7, bei der ein Saug- (32o) und ein Druckpunkt (36o) der Zirkulationspumpe (24) strömungstechnisch mit dem mindestens einen Strömungskanal (28,32,34,36) verbindbar sind.

9. Vorrichtung nach Anspruch 1, bei der die Ventile (1...9) in einer Reihe nebeneinander angeordnet sind.

10. Vorrichtung nach Anspruch 1 mit mindestens einer Zuführleitung (12z, 14z) für einen Rücklauf einer Anlage aus der Gruppe Luftwärmetauscher, Solarwärmetauscher, Erdwärmetauscher und mindestens einer korrespondieren Wegführleitung (12w, 14w) zu einem korrespondierenden Vorlauf der Anlage.

11. Vorrichtung nach Anspruch 1 mit mindestens einer Zuführleitung (18z) für den Rücklauf einer Wärmepumpe und mindestens einer Wegführleitung (18w) zum Vorlauf einer Wärmepumpe.

## Claims

1. Device for a directed guidance of at least one fluid along different, pre-determinable flow paths, with multiple supply pipes (12z...18z) for said fluid leading into the device and multiple outlet pipes (12w...18w) for said fluid leading out of the device, wherein the supply pipes (12z...18z) and the outlet pipes (12w...18w) are connectable via at least one flow channel (28,32,34,36) which may be closed by valves (1...9) with respect to the supply pipes (12z...18z) and/or with respect to the outlet pipes (12w...18w), **characterised in that** the valves (1...9) may be activated via a common camshaft (20).

2. Device according to claim 1, wherein at least one supply pipe (12z...18z) is selectively connectable via at least one valve (1...9) with different outlet pipes (12w...18w) to form different flow paths, and/or wherein at least one outlet pipe (12w...18w) is selectively connectable via at least one valve (1...9) with different supply pipes (12z...18z) to form different flow paths.

3. Device according to claim 1, wherein multiple supply pipes (12z...18z) and outlet pipes (12w...18w) are located after each other along a level (1) in the main flow direction of the fluid.

4. Device according to claim 1, wherein multiple supply pipes (12z...18z) and outlet pipes (12w...18w) are connectable via a common flow channel (28,32,34,36) in a fluidic manner.

5. Device according to claim 1, wherein the flow channel (28,32,34,36) is located along a level (11) which runs height-wise shifted to the main flow direction of the fluid.

6. Device according to claim 1, wherein the flow channel (28,32,34,36) is located along a level (11) which is generally parallel to a level (1) along which the supply pipes (12z...18z) and outlet pipes (12w...18w) are arranged.

7. Device according to claim 1, wherein the supply pipes (12z...18z) and outlet pipes (12w...18w) are connectable to a circulation pump (24).

8. Device according to claim 7, wherein a suck-in side (32o) and a pressure side (36o) of the circulation pump (24) are connectable with said at least one flow channel (28,32,34,36) in a fluidic manner.

9. Device according to claim 1, wherein the valves (1...9) are located in a row, side by side.

10. Device according to claim1 with at least one supply pipe (12z,14z) for a return-line of an apparatus of the group: air heat-exchanger, solar heat-exchanger and geothermal heat-exchanger and at least one corresponding outlet pipe (12w,14w) to a corresponding feeding-line of the apparatus.

11. Device according to claim 1 with at least one supply pipe (18z) for the return-line of a heat-pump and at least one outlet pipe (18w) for the feeding-line of a heat-pump.

## Revendications

1. Dispositif pour le guidage dirigé d'au moins un fluide le long de voies d'écoulement différentes pouvant être prédéfinies, comprenant :
plusieurs conduites d'arrivée (12z ... 18z) pour le fluide dans le dispositif, et
plusieurs conduites d'évacuation (12w ... 18w) pour le fluide hors du dispositif, sachant que
les conduites d'arrivée (12z ... 18z) et les conduites d'évacuation (12w ... 18w) peuvent être reliées par au moins un canal d'écoulement (28, 32, 34, 36) qui peut être bloqué via des vannes (1 ... 9) par rapport aux conduites d'arrivée (12z ... 18z) et/ou aux conduites d'évacuation (12w ... 18w),
**caractérisé en ce que**
les vannes (1 ... 9) peuvent être activées par un arbre à cames (20) commun.

2. Dispositif selon la revendication 1, dans lequel
au moins une conduite d'arrivée (12z ... 18z) peut être reliée au choix à différentes conduites d'évacuation (12w ... 18w) via au moins une vanne (1 ... 9), et/ou
au moins une conduite d'évacuation (12w ... 18w) peut être reliée au choix à différentes conduites d'arrivée (12z ... 18z) via au moins une vanne (1 ... 9) pour former différentes voies d'écoulement.

3. Dispositif selon la revendication 1, dans lequel plusieurs conduites d'arrivée (12z ... 18z) et conduites d'évacuation (12w ... 18w) sont disposées l'une derrière l'autre le long d'un niveau (I) dans le sens d'écoulement principal du fluide.

4. Dispositif selon la revendication 1, dans lequel
plusieurs conduites d'arrivée (12z ... 18z) et conduites d'évacuation (12w ... 18w) sont reliées en technique d'écoulement via au moins un canal d'écoulement (28, 32, 34, 36) commun.

5. Dispositif selon la revendication 1, dans lequel le canal d'écoulement (28, 32, 34, 36) est disposé le long d'un niveau (II) qui est décalé en hauteur par rapport au sens d'écoulement principal du fluide.

6. Dispositif selon la revendication 1, dans lequel le canal d'écoulement (28, 32, 34, 36) est disposé le long d'un niveau (II) qui est essentiellement parallèle à un niveau (I), le long duquel passent les conduites d'arrivée (12z ... 18z) et les conduites d'évacuation (12w ... 18w).

7. Dispositif selon la revendication 1, dans lequel les conduites d'arrivée (12z ... 18z) et conduites d'évacuation (12w ... 18w) peuvent être raccordées à une pompe de circulation (24).

8. Dispositif selon la revendication 7, dans lequel un point d'aspiration (320) et un point de poussée (360) de la pompe de circulation (24) peuvent être raccordés en technique d'écoulement à l'au moins un canal d'écoulement (28, 32, 34, 36).

9. Dispositif selon la revendication 1, dans lequel les vannes (1 ... 9) sont disposées l'une à côté de l'autre dans une rangée.

10. Dispositif selon la revendication 1, comprenant au moins une conduite d'arrivée (12z, 14z) pour un circuit de retour d'une installation du groupe : échangeur de chaleur air, échangeur de chaleur solaire, échangeur de chaleur terre, et au moins une conduite d'évacuation (12w, 14w) correspondante vers un circuit d'avancée correspondant de l'installation.

11. Dispositif selon la revendication 1, comprenant au moins une conduite d'arrivée (18z) pour le circuit de retour d'une pompe à chaleur et au moins une conduite d'évacuation (18w) vers le circuit d'avancée d'une pompe à chaleur.
